# EUROPÄISCHE PATENTSCHRIFT

(11) **EP 2 756 202 B1**
(45) Veröffentlichungstag und Bekanntmachung des Hinweises auf die Patenterteilung: **30.09.2015**
(21) Anmeldenummer: 12784222.7
(22) Anmeldetag: 23.10.2012
(51) Int. Cl.: F16D 7/02

(54) **RUTSCHKUPPLUNG MIT AUTOMATISCHEM LÖSEN BEI ANHALTENDER ÜBERLAST**
SLIP COUPLING WITH AUTOMATIC RELEASE IN THE EVENT OF A PERSISTENT OVERLOAD
ACCOUPLEMENT À GLISSEMENT À DESSERRAGE AUTOMATIQUE EN CAS DE SURCHARGE CONTINUE

(30) Priorität: 04.11.2011 DE 102011085786
(43) Veröffentlichungstag der Anmeldung: 23.07.2014
(73) Patentinhaber: Siemens Aktiengesellschaft, 80333 München (DE)
(72) Erfinder: PFANNSCHMIDT, Bernd, 90574 Rosstal (DE)
(86) Internationale Anmeldenummer: PCT/EP2012/070914
(87) Internationale Veröffentlichungsnummer: WO 2013/064389

(56) Entgegenhaltungen:
- EP-A1- 0 647 791
- DE-A1- 3 145 116
- DE-A1- 19 800 101
- DE-A1-102007 032 412
- DE-B3-102004 026 412
- DE-B3-102005 053 896

## Beschreibung

Die vorliegende Erfindung betrifft eine Rutschkupplung,
- wobei die Rutschkupplung ein Paar von Kupplungselementen aufweist,
- wobei die beiden Kupplungselemente um eine gemeinsame Rotationsachse rotierbar sind und jeweils eine ringförmig um die Rotationsachse umlaufende Kupplungsfläche aufweisen.

Derartige Rutschkupplungen sind - insbesondere im Eisenbahnwesen - allgemein bekannt. Siehe z.B. DE 198 00 101 A1.

Antriebe für Schienenfahrzeuge bestehen häufig aus einem Motor, welcher in einem Drehgestell des Schienenfahrzeugs befestigt ist, und einem Getriebe, das seinerseits auf der Treibradachse des Schienenfahrzeugs gelagert ist und sich über eine Drehmomentstütze am Drehgestell abstützt. Weiterhin ist zwischen dem Motor und dem Getriebe in der Regel eine kardanische Kupplung angeordnet, welche die Relativbewegung zwischen dem Drehgestell und der Treibradachse ausgleicht und das Antriebsmoment vom Motor auf die Treibradachse überträgt.

Derartige Bahnantriebe erzeugen im Normalbetrieb Beschleunigungsmomente (ggf. in beide Richtungen) und Verzögerungsmomente (ggf. ebenfalls in beide Richtungen). Dadurch werden das Schienenfahrzeug und mit dem Schienenfahrzeug gekuppelte andere Schienenfahrzeuge entsprechend beschleunigt und verzögert. Diese normalen Drehmomente werden gelegentlich durch sehr kurzzeitig wirkende, teilweise sehr stark überhöhte sogenannte Kurzschlussmomente überschritten, welche aus dem Zusammenwirken einer Stromrichterspeisung und dem Motor heraus entstehen können. Der Bahnantrieb kann derart ausgelegt sein, dass diese großen Kurzschlussmomente von allen tragenden Teilen innerhalb der Antriebseinheit verkraftet werden. Alternativ müssen die Kurzschlussmomente in ihrer Auswirkung begrenzt werden. Für die Begrenzung der Auswirkung sind in der Regel entlastende Elemente wie beispielsweise eine Rutschkupplung der obenstehend beschriebenen Art vorgesehen.

Bei Bahnantrieben kann es weiterhin im Betrieb zu Störsituationen kommen, bei welchen das Auslegungsmoment des Antriebs für längere Zeit anhaltend überschritten wird. Dies ist beispielsweise dann der Fall, wenn im Motor ein Schaden auftritt, aufgrund dessen der Läufer des Motors nicht mehr ausreichend geführt wird. In Einzelfällen kann es dadurch dazu kommen, dass der Läufer in der Ständerbohrung des Motors schleift oder sogar blockiert. Insbesondere ein derartiges Blockieren des Läufers kann zu Folgesachschäden führen, die teilweise ein erhebliches Ausmaß erreichen können. Um derartigen Schäden vorzubeugen, ist es erforderlich, das über die Rutschkupplung übertragene Moment nicht nur zu begrenzen, sondern die Rutschkupplung zu lösen, so dass die Drehmomentübertragung (der Kraftschluss) zwischen Motor und Treibradachse unterbrochen wird.

Die Aufgabe der vorliegenden Erfindung besteht darin, eine Rutschkupplung der eingangs genannten Art derart weiterzuentwickeln, dass sie bei einer länger anhaltenden Überlast automatisch und zwangsweise den Kraftschluss zwischen ihren Kupplungselementen aufhebt. Das Auslösen soll jedoch nicht sofort beim erstmaligen Auftreten der Überlast erfolgen, sondern erst dann, wenn die Überlast für längere Zeit anhält.

Die Aufgabe wird durch eine Rutschkupplung mit den Merkmalen des Anspruchs 1 gelöst. Vorteilhafte Ausgestaltungen der erfindungsgemäßen Rutschkupplung sind Gegenstand der abhängigen Ansprüche 2 bis 11.

Erfindungsgemäß ist vorgesehen, eine Rutschkupplung der eingangs genannten Art dadurch auszugestalten,
- dass eines der beiden Kupplungselemente einen fluchtend zur Rotationsachse angeordneten Gewindezapfen aufweist, auf den eine Spannmutter aufgeschraubt ist, mittels derer die Kupplungsfläche des anderen Kupplungselements an die Kupplungsfläche des einen Kupplungselements anpressbar ist, so dass ein auf eines der beiden Kupplungselemente wirkendes Drehmoment bis zu einem Haftmoment schlupffrei auf das andere Kupplungselement übertragen wird und darüber hinaus unter Durchrutschen der beiden Kupplungselemente gegeneinander auf ein Gleitmoment begrenzt wird,
- dass zwischen der Spannmutter und dem anderen Kupplungselement eine Anzahl von Freiwegscheiben angeordnet ist,
- dass die Spannmutter, die Freiwegscheiben und das andere Kupplungselement miteinander zusammenwirkende Mitnehmerelemente aufweisen,
- dass die Mitnehmerelemente bis zu einem Grenzwinkel ein Durchrutschen der beiden Kupplungselemente gegeneinander ohne Verdrehen der Spannmutter ermöglichen und bei einem Durchrutschen der beiden Kupplungselemente gegeneinander über den Grenzwinkel hinaus die Spannmutter zwangsweise mit verdrehen und
- dass bei einem Verdrehen der Spannmutter die Anpressung der Kupplungsfläche des anderen Kupplungselements an die Kupplungsfläche des einen Kupplungselements und dadurch das schlupffrei übertragbare Haftmoment geändert wird.

Durch das Vorsehen der Freiwegscheiben in Verbindung mit dem dadurch ermöglichten Durchrutschen der Kupplungselemente um den Grenzwinkel wird einem sofortigen Lösen der kraftschlüssigen Verbindung der Kupplungselemente vorgebeugt. Durch das zwangsweise Verdrehen der Spannmutter wird bei einer länger anhaltenden Überlast die Rutschkupplung automatisch gelöst.

Die Rutschkupplung, so wie sie obenstehend erläutert wurde, arbeitet nur in einer Drehmomentrichtung ordnungsgemäß. Falls nicht vorab bekannt ist, in welcher Drehmomentrichtung die Überlast auftritt, ist es daher erforderlich, ein Paar von Rutschkupplungen zu verwenden,
- wobei beide Rutschkupplungen jeweils als Rutschkupplung wie obenstehend beschrieben ausgebildet sind,
- wobei eines der Kupplungselemente der einen Rutschkupplung mit einem der Kupplungselemente der anderen Rutschkupplung drehfest verbunden ist,
- wobei die Gewindezapfen der beiden Rutschkupplungen mit gegenläufigen Gewinden ausgestattet sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Paar miteinander verbundener Rutschkupplungen im Längsschnitt und
- FIG 2 bis 5: je eine Draufsicht auf eine der Rutschkupplungen von FIG 1 in verschiedenen Betriebszuständen der Rutschkupplung.

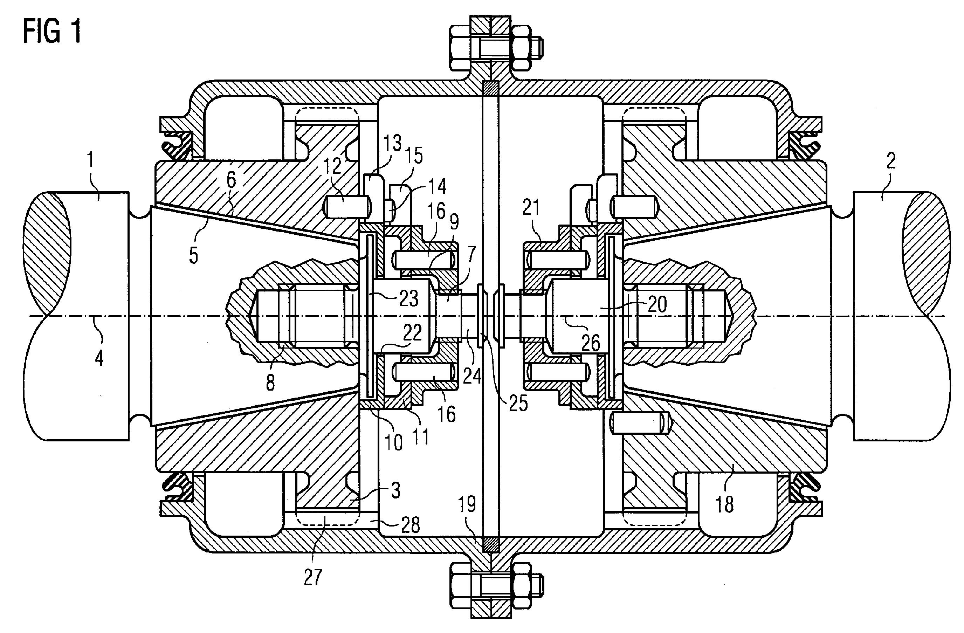

Gemäß FIG 1 ist eine Rutschkupplung zwischen einem Antrieb (sichtbar ist in FIG 1 die Antriebswelle 1) und einer Last (sichtbar ist in FIG 1 die Lastwelle 2) angeordnet. Der Antrieb kann beispielsweise als elektrischer Antrieb für ein Schienenfahrzeug ausgebildet sein, die Last als Treibrad oder als Treibradsatz des Schienenfahrzeugs.

Die Rutschkupplung weist mindestens ein Paar von Kupplungselementen 1, 3 auf, die um eine gemeinsame Rotationsachse 4 rotieren und jeweils eine ringförmig um die Rotationsachse 4 umlaufende Kupplungsfläche 5, 6 aufweisen. Die Kupplungselemente 1, 3 können eigenständige Elemente sein. Vorzugsweise ist jedoch eines der Kupplungselemente 1, 3 mit der Lastwelle 2 oder - wie in FIG 1 dargestellt - mit der Antriebswelle 1 identisch. Die Kupplungsflächen 5, 6 können entsprechend der Darstellung von FIG 1 als Kegelflächen ausgebildet sein. Alternativ kann es sich um Flächen handeln, die orthogonal zur Rotationsachse 4 orientiert sind. Über die Kupplungsflächen 5, 6 erfolgt die Übertragung eines Drehmoments vom Antrieb zur Last und umgekehrt.

Soweit nachfolgend die Begriffe "axial", "radial" und "tangential" verwendet werden, sind sie stets auf die Rotationsachse 4 bezogen. Der Begriff "axial" bedeutet eine Richtung parallel zur Rotationsachse 4. Der Begriff "radial" bedeutet eine Richtung orthogonal zur Rotationsachse 4 auf die Rotationsachse 4 zu bzw. von ihr weg. Der Begriff "tangential" bedeutet eine Richtung, die sowohl zur Axialrichtung als auch zur Radialrichtung orthogonal verläuft. Die Tangentialrichtung verläuft also in konstantem radialem Abstand kreisförmig um die Rotationsachse 4 herum.

Eines der beiden Kupplungselemente 1, 3 - gemäß FIG 1 das antriebsseitige Kupplungselement 1 - weist einen Gewindezapfen 7 auf. Der Gewindezapfen 7 ist fluchtend zur Rotationsachse 4 angeordnet. Er ist mit dem entsprechenden Kupplungselement 1 gesichert verbunden, so dass er sich nicht versehentlich von dem entsprechenden Kupplungselement 1 lösen kann. Beispielsweise kann der Gewindezapfen 7 (teilweise) in ein entsprechendes Innengewinde 8 des entsprechenden Kupplungselements 1 eingedreht sein und danach gegen ein weiteres Verdrehen gesichert sein, beispielsweise durch Verschweißen, durch Verkleben oder durch einen Klemmkeil. Auch ist es möglich, dass der Gewindezapfen 7 einstückig mit dem entsprechenden Kupplungselement 1 verbunden ist.

Auf den Gewindezapfen 7 ist eine Spannmutter 9 aufgeschraubt. Die Spannmutter 9 wirkt auf die Kupplungsfläche 6 des anderen Kupplungselements 3. Insbesondere presst sie die Kupplungsfläche 6 des anderen Kupplungselements 3 an die Kupplungsfläche 5 des einen Kupplungselements 1 an. Aufgrund des Anpressens der Kupplungsflächen 5, 6 aneinander sind die Kupplungselemente 1, 3 in der Lage, das Drehmoment zwischen Antrieb und Last zu übertragen.

Aufgrund des Anpressens der Kupplungsflächen 5, 6 aneinander sind die Kupplungsflächen 5, 6 im Reibschluss zueinander. Nur wenn das zu übertragende Drehmoment kleiner als ein Haftmoment ist, erfolgt daher eine schlupffreie Übertragung des Drehmoments. Übersteigt das zu übertragende Drehmoment hingegen das Haftmoment, rutschen die Kupplungselemente 1, 3 gegeneinander durch. In diesem Fall wird das tatsächlich übertragene Drehmoment auf ein Gleitmoment begrenzt, wobei das Gleitmoment kleiner als das Haftmoment ist.

Die Spannmutter 9 wirkt nicht direkt auf das andere Kupplungselement 3, sondern über eine Anzahl von Freiwegscheiben 10, 11, die zwischen der Spannmutter 9 und dem anderen Kupplungselement 3 angeordnet sind. Minimal ist eine einzige Freiwegscheibe 10, 11 vorhanden. In der Regel sind mehrere Freiwegscheiben 10, 11 vorhanden, beispielsweise entsprechend der Darstellung von FIG 1 zwei Freiwegscheiben 10, 11. In der Praxis sind oftmals mehr als zwei Freiwegscheiben 10, 11 vorhanden, beispielsweise drei bis sechs Freiwegscheiben 10, 11.

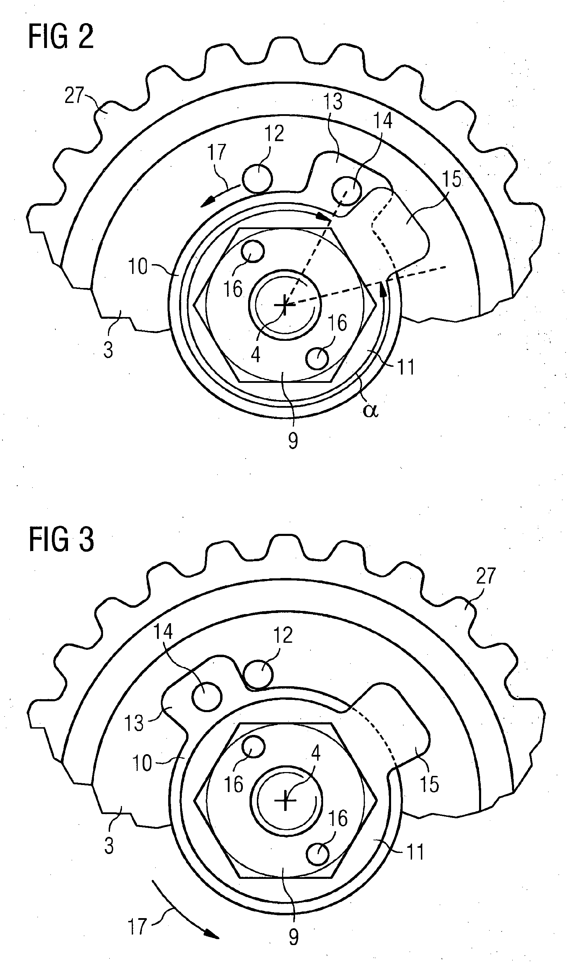

Die Spannmutter 9, die Freiwegscheiben 10, 11 und das andere Kupplungselement 3 weisen miteinander zusammenwirkende Mitnehmerelemente 12 bis 16 auf. Die Mitnehmerelemente 12 bis 16 sind derart ausgebildet, dass sie zwar eine Drehbewegung des anderen Kupplungselements 3 relativ zur angrenzenden Freiwegscheibe 10, von der an das andere Kupplungselement 3 angrenzenden Freiwegscheibe 10 relativ zur nächsten Freiwegscheibe 11 usw. zulassen, diese Drehbewegung aber nicht völlig frei ist, sondern - bezogen auf die Rotationsachse 4 - auf einen jeweiligen Winkelbereich α begrenzt ist (siehe FIG 2). Der jeweilige Winkelbereich α zwischen unmittelbar aneinandergrenzenden Elementen 3, 10, 11, 9 (anderes Kupplungselement 3, Freiwegscheiben 10, 11 und ggf. Spannmutter 9) ist selbstverständlich kleiner als 360°, beispielsweise 300°. Der insgesamt ermöglichte Drehbereich, also die Summe der einzelnen Winkelbereiche, stellt einen Grenzwinkel dar. Der Grenzwinkel kann größer als 360° sein.

Die Haft- und Reibungsverhältnisse des anderen Kupplungselements 3, der Freiwegscheiben 10, 11 und ggf. der Spannmutter 9 relativ zueinander sowie die Haft- und Reibungsverhältnisse der Spannmutter 9 zum Gewindezapfen 7 sind derart aufeinander abgestimmt, dass innerhalb des insgesamt zulässigen Drehbereichs ein Verdrehen der Kupplungselemente 1, 3 gegeneinander erfolgt, ohne die Spannmutter 9 zu verdrehen. Bei einem Durchrutschen der Kupplungselemente 1, 3 gegeneinander werden daher zunächst zwar das andere Kupplungselement 3 relativ zur angrenzenden Freiwegscheibe 10, die angrenzende Freiwegscheibe 10 relativ zur nächsten Freiwegscheibe 11 usw. und eventuell auch die letzte Freiwegscheibe 11 relativ zur Spannmutter 9 verdreht. Die Spannmutter 9 selbst wird hingegen nicht verdreht.

Die entsprechende Abstimmung der Haft- und Reibverhältnisse ist Fachleuten allgemein bekannt. Beispielsweise können die Material- und Schmierungsverhältnisse entsprechend gewählt werden. Auch ist es möglich, an geeigneter Stelle Gummielemente zwischenzuordnen, welche das erforderliche Haftvermögen lokal beeinflussen. Auch ist es möglich, beispielsweise die Spannmutter 9 mit dem Gewindezapfen 7 leicht zu verkleben oder zwischen dem Gewindezapfen 7 und der Spannmutter 9 eine Elastomerschicht anzubringen, welche das Verdrehen der Spannmutter 9 auf dem Gewindezapfen 7 zwar hinreichend erschwert, aber nicht unmöglich macht.

Durch die entsprechende Abstimmung der Haft- und Reibungsverhältnisse aufeinander erfolgt also eine im Falle eines überhöhten Drehmoments eine Relativverdrehung der Kupplungselemente 1, 3 gegeneinander, ohne dass die Spannmutter 9 relativ zum einen Kupplungselement 1 gedreht wird. Dies gilt, bis die Relativverdrehung der Kupplungselemente 1, 3 gegeneinander den insgesamt zulässigen Drehbereich - also den Grenzwinkel - erreicht. Danach ist ein weiteres Verdrehen der Kupplungselemente 1, 3 gegeneinander zwangsweise mit einen Verdrehen der Spannmutter 9 verbunden.

Das Verdrehen der Spannmutter 9 ändert die Anpressung der Kupplungsfläche 5 des einen Kupplungselements 1 an die Kupplungsfläche 6 des anderen Kupplungselements 3. Durch die geänderte Anpressung werden zugleich auch das schlupffrei übertragbare Haftmoment und hiermit korrespondierend auch das entsprechende Gleitmoment geändert.

Die entsprechende Änderung der Anpressung ist insbesondere dann von Bedeutung, wenn die Anpressung der Kupplungsflächen 5, 6 aneinander durch das Verdrehen der Spannmutter 9 verringert wird. Denn durch das Verringern der Anpressung sinken das Haftmoment und das Gleitmoment ab, so dass die Kupplungselemente 1, 3 noch leichter als zuvor gegeneinander durchrutschen. Es tritt also ein selbstverstärkender Effekt auf.

Das obenstehend erläuterte Prinzip der vorliegenden Erfindung wird nachstehend unter zusätzlicher Bezugnahme auf die FIG 2 bis 5 nochmals kurz dargelegt. Den FIG 1 bis 5 liegt hierbei - rein beispielhaft - zugrunde, dass exakt zwei Freiwegscheiben 10, 11 vorhanden sind, die nachfolgend als elementseitige Freiwegscheibe 10 und als mutterseitige Freiwegscheibe 11 bezeichnet werden. Es wird jedoch nochmals darauf hingewiesen, dass die Anzahl an Freiwegscheiben 10, 11 nicht entscheidend ist.

FIG 2 zeigt eine Draufsicht auf die Kupplungselemente 1, 3 in einem Anfangszustand. Als Mitnehmerelemente 12, 13 zwischen dem anderen Kupplungselement 3 und der elementseitigen Freiwegscheibe 10 weist das andere Kupplungselement 3 einen Stift 12 auf, der sich in Axialrichtung erstreckt. Der Stift 12 wirkt mit einer in Radialrichtung vorspringenden Nase 13 zusammen, die das korrespondierende Mitnehmerelement 13 der elementseitigen Freiwegscheibe 10 ist. Der Stift 12 des anderen Kupplungselements 3 liegt zunächst an der in FIG 2 linken Seite der Nase 13 der elementseitigen Freiwegscheibe 10 an.

In analoger Ausgestaltung sind als Mitnehmerelemente 14, 15 zwischen den Freiwegscheiben 10, 11 an der elementseitigen Freiwegscheibe 10 ein in Axialrichtung ragender Stift 14 vorhanden, der mit einer Nase 15 zusammenwirkt, die an der mutterseitigen Freiwegscheibe 11 angeordnet ist und sich in Radialrichtung erstreckt. Der Stift 14 kann insbesondere an der Nase 13 der elementseitigen Freiwegscheibe 10 angeordnet sein. Dies ist jedoch nicht zwingend erforderlich. Die Spannmutter 9 ist mit der mutterseitigen Freiwegscheibe 11 über Mitnehmerelemente 16 drehfest verbunden, beispielsweise über die in den FIG 1 bis 5 dargestellten Stifte 16. Alternativ kann eine drehfeste Verbindung beispielsweise über Schweißpunkte erreicht werden. Auch ist es möglich, dass die Spannmutter 9 mit der mutterseitigen Freiwegscheibe 11 auf ähnliche Weise zusammenwirkt wie die Freiwegscheiben 10, 11 miteinander und die elementseitige Freiwegscheibe 10 mit dem anderen Kupplungselement 3.

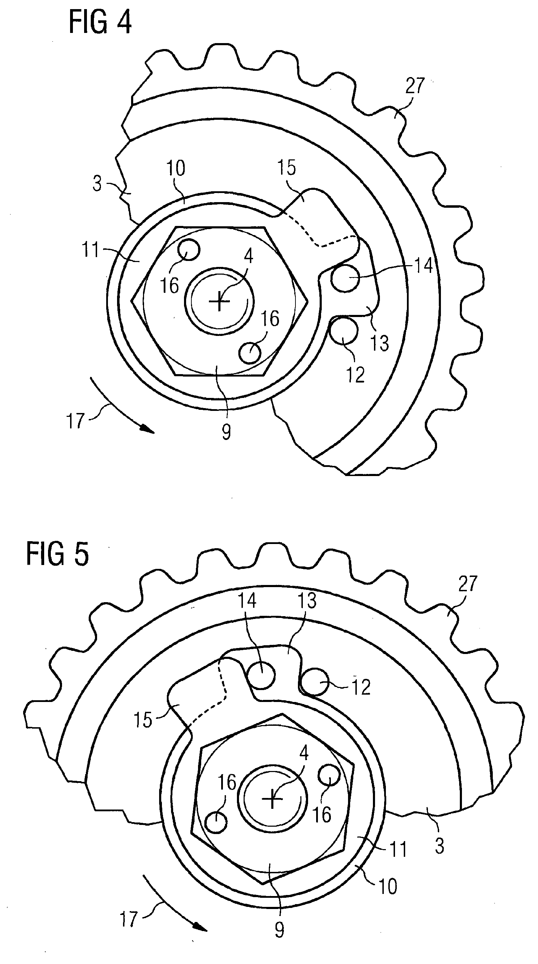

Wenn das andere Kupplungselement 3 relativ zum einen Kupplungselement 1 entsprechend dem in FIG 2 mit dem Bezugszeichen 17 versehenen Pfeil durchrutscht, wandert der Stift 12 des anderen Kupplungselements 3 in Richtung des Pfeils 17, im vorliegenden Fall also entgegen dem Uhrzeigersinn, bis der Stift 12 an der in FIG 2 rechten Seite der Nase 13 der elementseitigen Freiwegscheibe 10 anliegt. Danach ist ein weiteres Durchrutschen der Kupplungselemente 1, 3 gegeneinander mit einem Verdrehen der elementseitigen Freiwegscheibe 10 verbunden. Die Nase 13 der elementseitigen Freiwegscheibe 10 und damit auch der Stift 14 der elementseitigen Freiwegscheibe 10 wandert daher bei einem weiteren Verdrehen der Kupplungselemente 1, 3 gegeneinander ebenfalls in Richtung des Pfeils 17. Dieser Zustand ist in FIG 3 dargestellt. Ein weiteres Verdrehen der Kupplungselemente 1, 3 gegeneinander ohne Verdrehen der Spannmutter 9 ist möglich, bis der Stift 14 der elementseitigen Freiwegscheibe 10 an der in den FIG 2 und 3 unteren Seite der Nase 15 der mutterseitigen Freiwegscheibe 11 anliegt. Dieser Zustand ist in FIG 4 dargestellt.

Da bis zu diesem Punkt noch kein Verdrehen der Spannmutter 9 erfolgte, ist die Anpressung der Kontaktflächen 5, 6 aneinander bis hierher unverändert geblieben. Wenn jedoch ein noch weitergehendes Verdrehen der Kupplungselemente 1, 3 gegeneinander erfolgt, wird entsprechend der Darstellung von FIG 5 auch die Spannmutter 9 zwangsweise mitverdreht und dadurch der Anpresszustand der Kupplungsflächen 5, 6 aneinander geändert. Insbesondere wird im Falle eines Rechtsgewindes des Gewindezapfens 7 die Spannmutter 9 gelöst.

Umgekehrt wird bei einem Verdrehen der Kupplungselemente 1, 3 entgegen der Richtung des Pfeils 17 die Spannmutter 9 stärker angezogen und dadurch das Haftmoment erhöht. Dies ist in der Regel nicht erwünscht. Die Rutschkupplung, wie sie bis hierher erläutert wurde, ist daher nur dann ausreichend, wenn vorab bekannt ist, in welche Drehrichtung - in Richtung des Pfeils 17 oder entgegen der Richtung des Pfeils 17 - ein Drehmoment zwischen den Kupplungselementen 1, 3 übertragen wird. Entsprechend der Übertragungsrichtung kann das Gewinde des Gewindezapfens 7 als Linksgewinde oder als Rechtsgewinde ausgelegt werden.

Wenn hingegen nicht vorab bekannt ist, in welche Richtung das zu übertragende Drehmoment wirkt, wird gemäß FIG 1 vorzugsweise ein Paar von Rutschkupplungen verwendet. Die beiden Rutschkupplungen können jeweils so ausgebildet sein, wie dies obenstehend erläutert wurde. Das lastseitige Kupplungselement 3 der einen Rutschkupplung ist in diesem Fall mit dem antriebsseitigen Kupplungselement 18 der anderen Rutschkupplung drehfest verbunden, beispielsweise direkt oder - wie in FIG 1 dargestellt - über eine Hülse 19. Die Gewindezapfen 7, 20 der beiden Rutschkupplungen sind jedoch mit gegenläufigen Gewinden (einmal linksgängig, einmal rechtsgängig) versehen.

Im Falle des Vorhandenseins zweier Rutschkupplungen, deren Gewindezapfen 7, 20 gegenläufige Gewinde aufweisen, kann ein andauerndes Durchrutschen von Kupplungselementen 1, 2, 3, 18 gegeneinander direkt zum Lösen der entsprechenden Spannmutter 9, 21 und damit zum Öffnen der entsprechenden Rutschkupplung führen. Alternativ wird zwar zunächst die "falsche" Spannmutter 9, 21 angezogen. Das hierdurch bewirkte Erhöhen des zugehörigen Haft- und Gleitmoments der entsprechenden Rutschkupplung führt jedoch dazu, dass nachfolgend die "richtigen" Kupplungselemente 1, 3 bzw. 2, 18 gegeneinander verdreht werden und dadurch nachfolgend die "richtige" Spannmutter 9, 21 gelöst wird.

Im Rahmen der nachfolgenden Ausführungen wird nunmehr auf die zuerst erläuterte Rutschkupplung näher eingegangen. Die entsprechenden Ausführungen sind jedoch in analoger Weise auch für die andere Rutschkupplung gültig, sofern diese vorhanden ist.

Die Freiwegscheiben 10, 11 sollten zwar um die Rotationsachse 4 drehbar sein und Axialkräfte übertragen können, in Radialrichtung jedoch fixiert sein. Vorzugsweise weist der Gewindezapfen 7 daher einen Zentrierbund 22 auf. Mittels des Zentrierbundes 22 werden die Freiwegscheiben 10, 11 radial zur Rotationsachse 4 zentriert gehalten.

Weiterhin sollte vorzugsweise zwar der Reibschluss zwischen den Kupplungselementen 1, 3 beim Verdrehen der Spannmutter 9 gelöst werden. Dennoch soll auch weiterhin eine hinreichende Zentrierung der Kupplungselemente 1, 3 relativ zueinander gewährleistet werden. Aus diesem Grund ist an dem einen Kupplungselement 1 vorzugsweise ein Kupplungsrückhalteelement 23 angeordnet, mittels dessen ein axiales Verschieben des anderen Kupplungselements 3 relativ zum einen Kupplungselement 1 begrenzt wird. Das Kupplungsrückhalteelement 23 kann entsprechend der Darstellung von FIG 1 beispielsweise als Anschlagbund ausgebildet sein.

Wenn die Spannmutter 9 aufgrund des Verdrehens der Spannmutter 9 gelöst wird, ist die kraftschlüssige Verbindung der Kupplungselemente 1, 3 durch das Lösen der Spannmutter 9 aufgehoben. Die Kupplungselemente 1, 3 führen daher stets dann eine Relativdrehbewegung zueinander durch, wenn ein - wenn auch nur geringes - Drehmoment anliegt. Es muss daher gewährleistet sein, dass die Spannmutter 9 nicht immer weiter aufgedreht wird. Dies kann beispielsweise dadurch erreicht werden, dass die Mitnehmerelemente 12 bis 16 des anderen Kupplungselements 3, der Freiwegscheiben 10, 11 und der Spannmutter 9 derart dimensioniert sind, dass nach dem Lösen der Spannmutter 9 die Mitnehmerelemente 12, 16 axial voneinander beabstandet sind. Dadurch ist ein freies Verdrehen der Freiwegscheiben 10, 11 um die Rotationsachse 4 möglich, ohne die Spannmutter 9 weiter zu verdrehen. Die Spannmutter 9 bleibt in diesem Zustand auf dem Gewindezapfen 7 angeordnet.

Alternativ oder zusätzlich kann der Gewindezapfen 7 an seinem Ende einen gewindefreien Abschnitt 24 aufweisen. In diesem Fall ist die Spannmutter 9, wenn sie sich in dem gewindefreien Abschnitt 24 befindet, ohne Axialbewegung frei um die Rotationsachse 4 drehbar.

Die Spannmutter 9 sollte weiterhin vorzugsweise nach dem Lösen auf dem Gewindezapfen 7 gehalten werden. Zu diesem Zweck ist vorzugsweise am Gewindezapfen 7 ein Mutterrückhalteelement 25 angeordnet, mittels dessen eine Axialbewegung der Spannmutter 9 begrenzt wird.

Es ist möglich, dass die Rutschkupplung (bzw. das Paar von Rutschkupplungen) axial unverschiebbar angeordnet ist. Vorzugsweise jedoch ist die Rutschkupplung über eines ihrer Kupplungselemente 1, 3 in einer Hülse 19, welche die Rutschkupplung radial außen umgibt, kardanisch aufgehängt. Es kann sich bei der Hülse 19 um diejenige Hülse handeln, welche ggf. bei einem Paar von Rutschkupplungen zwei Kupplungselemente 3, 18 drehfest miteinander verbindet. Durch die entsprechende Aufhängung des entsprechenden Kupplungselements 3 in der Hülse 19 sind Verkippungen einer Hülsenachse 26 gegenüber der Rotationsachse 4 möglich. Beispielsweise kann eines der Kupplungselemente 3 - es kann sich hierbei prinzipiell alternativ um das antriebsseitige Kupplungselement 18 oder um das lastseitige Kupplungselement 3 handeln - radial außen einen Außenzahnkranz 27 aufweisen, der in einem korrespondierenden Innenzahnkranz 28 der Hülse 19 geführt ist. Dadurch besteht zum einen eine drehfeste Verbindung des entsprechenden Kupplungselements 3 mit der Hülse 19. Andererseits ist dennoch ein Verkippen der Rotationsachse 4 gegen die Hülsenachse 26 möglich. Insbesondere können im Falle eines Paares von Rutschkupplungen entsprechend der Darstellung von FIG 1 das lastseitige Kupplungselement 3 der einen Rutschkupplung und das antriebsseitige Kupplungselement 18 der anderen Rutschkupplung auf diese Weise in der Hülse 19 aufgehängt sein.

In der Praxis kann die erfindungsgemäße Rutschkupplung beispielsweise bei Bahnantrieben eingesetzt werden. In diesem Fall wird die Rutschkupplung derart dimensioniert, dass sie die im Normalbetrieb auftretenden Drehmomente schlupffrei überträgt. Ein Durchrutschen der Kupplungselemente 1, 3 gegeneinander tritt nur in Sondersituationen auf, wobei im Wesentlichen zwei Fälle in Frage kommen. Der eine Fall ist das Auftreten eines Kurzschlussmoments. Derartige Kurzschlussmomente treten nur sehr selten und nur sehr kurzzeitig auf. Diese Sondersituation wird daher dadurch aufgefangen, dass ein Durchrutschen der Kupplungselemente 1, 3 gegeneinander bis zum Grenzwinkel möglich ist, ohne die Spannmutter 9 zu verdrehen. Die Anzahl an Freiwegscheiben 10, 11 und der zulässige Drehwinkel pro Freiwegscheibe 10, 11 können entsprechend bestimmt sein. Der andere Fall ist ein antriebs- oder auch lastseitiges Blockieren. In diesem Fall ergibt sich ein permanentes Durchrutschen der Rutschkupplung, so dass sehr rasch die Spannmutter 9 gelöst wird. Dieses Lösen erfolgt, sobald das Durchrutschen der Kupplungselemente 1, 3 den Grenzwinkel überschreitet.

Die vorliegende Erfindung weist viele Vorteile auf. Insbesondere ergibt sich auf einfache Weise ein Schutz des Antriebsstrangs vor Sachschäden im Falle von dauerhaft überhöhten Drehmomenten.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Rutschkupplung,
- wobei die Rutschkupplung ein Paar von Kupplungselementen (1,3) aufweist,
- wobei die beiden Kupplungselemente (1,3) um eine gemeinsame Rotationsachse (4) rotierbar sind und jeweils eine ringförmig um die Rotationsachse (4) umlaufende Kupplungsfläche (5, 6) aufweisen,
- wobei eines (1) der beiden Kupplungselemente (1,3) einen fluchtend zur Rotationsachse (4) angeordneten Gewindezapfen (7) aufweist, auf den eine Spannmutter (9) aufgeschraubt ist, mittels derer die Kupplungsfläche (6) des anderen Kupplungselements (3) an die Kupplungsfläche (5) des einen Kupplungselements (1) anpressbar ist, so dass ein auf eines der beiden Kupplungselemente (1,3) wirkendes Drehmoment bis zu einem Haftmoment schlupffrei auf das andere Kupplungselement (3,1) übertragen wird und darüber hinaus unter Durchrutschen der beiden Kupplungselemente (1,3) gegeneinander auf ein Gleitmoment begrenzt wird, **dadurch gekennzeichnet, daß**
- zwischen der Spannmutter (9) und dem anderen Kupplungselement (3) eine Anzahl von Freiwegscheiben (10,11) angeordnet ist,
- die Spannmutter (9), die Freiwegscheiben (10,11) und das andere Kupplungselement (9) miteinander zusammenwirkende Mitnehmerelemente (12 bis 16) aufweisen,
- die Mitnehmerelemente (12 bis 16) bis zu einem Grenzwinkel ein Durchrutschen der beiden Kupplungselemente (1, 3) gegeneinander ohne Verdrehen der Spannmutter (9) ermöglichen und bei einem Durchrutschen der beiden Kupplungselemente (1, 3) gegeneinander über den Grenzwinkel hinaus die Spannmutter (9) zwangsweise mit verdrehen,
- bei einem Verdrehen der Spannmutter (9) die Anpressung der Kupplungsfläche (6) des anderen Kupplungselements (3) an die Kupplungsfläche (5) des einen Kupplungselements (1) und dadurch das schlupffrei übertragbare Haftmoment geändert wird.

2. Rutschkupplung nach Anspruch 1, **dadurch gekennzeichnet, dass** die Kupplungsflächen (5,6) als Kegelflächen ausgebildet sind.

3. Rutschkupplung nach Anspruch 1 oder 2, **dadurch gekennzeichnet, dass** der Gewindezapfen (7) mit dem einen Kupplungselement (1) gesichert verbunden ist.

4. Rutschkupplung nach Anspruch 1, 2 oder 3, **dadurch gekennzeichnet, dass** die Spannmutter (9) mit der an sie angrenzenden Freiwegscheibe (11) drehfest verbunden ist.

5. Rutschkupplung nach einem der obigen Ansprüche, **dadurch gekennzeichnet , dass** der Gewindezapfen (7) einen Zentrierbund (22) aufweist, mittels dessen die Freiwegscheiben (10,11) radial zur Rotationsachse (4) zentriert gehalten sind.

6. Rutschkupplung nach einem der obigen Ansprüche, **dadurch gekennzeichnet, dass** an dem einen Kupplungselement (1) ein Kupplungsrückhalteelement (23) angeordnet ist, mittels dessen ein axiales Verschieben des anderen Kupplungselements (3) relativ zum einen Kupplungselement (1) begrenzt wird.

7. Rutschkupplung nach einem der obigen Ansprüche, **dadurch gekennzeichnet, dass** die Mitnehmerelemente (12 bis 16) derart dimensioniert sind, dass nach dem Lösen der Spannmutter (9) die Mitnehmerelemente (12 bis 16) axial voneinander beabstandet sind, so dass ein freies Verdrehen der Freiwegscheiben (10,11) um die Rotationsachse (4) möglich ist, ohne die Spannmutter (9) weiter zu verdrehen.

8. Rutschkupplung nach einem der obigen Ansprüche, **dadurch gekennzeichnet, dass** der Gewindezapfen (7) an seinem Ende einen gewindefreien Abschnitt (24) aufweist, so dass die Spannmutter (9), wenn sie sich in dem gewindefreien Abschnitt (24) befindet, ohne Axialbewegung frei um die Rotationsachse (4) drehbar ist.

9. Rutschkupplung nach einem der obigen Ansprüche, **dadurch gekennzeichnet, dass** am Gewindezapfen (7) ein Mutterrückhalteelement (25) angeordnet ist, mittels dessen eine Axialbewegung der Spannmutter (9) begrenzt wird.

10. Rutschkupplung nach einem der obigen Ansprüche, **dadurch gekennzeichnet, dass** die Rutschkupplung kardanisch aufgehängt ist.

11. Rutschkupplung nach Anspruch 10, **dadurch gekennzeichnet, dass** zum Realisieren der kärdanischen Aufhängung eines (3) der beiden Kupplungselemente (1, 3) radial außen einen Außenzahnkranz (27) aufweist, der in einem Innenzahnkranz (28) einer die Rutschkupplung radial außen umgebenden Hülse (19) geführt ist.

12. Paar von Rutschkupplungen,
- wobei beide Rutschkupplungen jeweils als Rutschkupplung nach einem der obigen Ansprüche ausgebildet sind,
- wobei eines (3) der Kupplungselemente (1,3) der einen Rutschkupplung mit einem (18) der Kupplungselemente (18,2) der anderen Rutschkupplung drehfest verbunden ist,
- wobei die Gewindezapfen (7,20) der beiden Rutschkupplungen mit gegenläufigen Gewinden ausgestattet sind.

## Claims

1. Slip coupling,
- wherein the slip coupling has a pair of coupling elements (1,3),
- wherein the two coupling elements (1,3) are rotatable about a common axis of rotation (4) and each have a coupling surface (5, 6) that is annularly circumferential about the axis of rotation (4),
- wherein one (1) of the two coupling elements (1,3) has a threaded journal (7) which is disposed in line with the axis of rotation (4) and to which a clamping nut (9) is screwed by means of which the coupling surface (6) of the other coupling element (3) can be pressed against the coupling surface (5) of the first coupling element (1) so that a torque acting on one of the two coupling elements (1,3) is transmitted in a slip-free manner to the other coupling element (3,1) up to a holding torque and, beyond that, is limited to a sliding torque as the coupling elements (1,3) slip against one another, **characterised in that**
- a number of free play disks (10,11) are disposed between the clamping nut (9) and the other coupling element (3),
- the clamping nut (9), the free play disks (10,11) and the other coupling element (9) have interacting driver elements (12 to 16),
- the driver elements (12 to 16) enable the coupling elements (1, 3) to slip against one another up to a critical angle without rotation of the clamping nut (9) and, if the coupling elements (1, 3) slip against one another beyond the critical angle, force the clamping nut (9) to co-rotate,
- if the clamping nut (9) rotates, the contact pressure of the coupling surface (6) of the other coupling element (3) on the coupling surface (5) of the first coupling element (1) and thereby the holding torque transmittable in a slip-free manner is changed.

2. Slip coupling according to claim 1, **characterised in that** the coupling surfaces (5, 6) are implemented as conical surfaces.

3. Slip coupling according to claim 1 or 2, **characterised in that** the threaded journal (7) is securely connected to the coupling element (1).

4. Slip coupling according to claim 1, 2 or 3, **characterised in that** the clamping nut (9) is connected to the adjacent free play disk (11) in a non-rotatable manner.

5. Slip coupling according to one of the preceding claims, **characterised in that** the threaded journal (7) has a centring collar (22) by means of which the free play disks (10,11) are kept centred radially with respect to the axis of rotation (4).

6. Slip coupling according to one of the preceding claims, **characterised in that** there is disposed on one coupling element (1) a coupling retention element (23) by means of which axial displacement of the other coupling element (3) relative to the first coupling element (1) is limited.

7. Slip coupling according to one of the preceding claims, **characterised in that** the driver elements (12 to 16) are dimensioned such that, after release of the clamping nut (9), the driver elements (12 to 16) are placed axially apart from one another so that free rotation of the free play disks (10,11) about the axis of rotation (4) is possible without further rotation of the clamping nut (9).

8. Slip coupling according to one of the preceding claims, **characterised in that** one end of the threaded journal (7) has an unthreaded section (24) so that, when the clamping nut (9) is in the unthreaded section (24), it can rotate freely about the axis of rotation (4) without axial movement.

9. Slip coupling according to one of the preceding claims, **characterised in that** there is disposed on the threaded journal (7) a nut retaining element (25) by means of which axial movement of the clamping nut (9) is limited.

10. Slip coupling according to one of the preceding claims, **characterised in that** the slip coupling is cardanically suspended.

11. Slip coupling according to claim 10, **characterised in that**, to implement the cardanic suspension, one (3) of the coupling elements (1, 3) has radially on the exterior an external toothed rim (27) which is guided in an internal toothed rim (28) of a sleeve (19) radially surrounding the slip coupling on the exterior.

12. Pair of slip couplings,
- wherein the two slip couplings are each implemented as a slip coupling according to one of the preceding claims,
- wherein one (3) of the coupling elements (1,3) of one slip coupling is non-rotationally connected to one (18) of the coupling elements (18,2) of the other slip coupling,
- wherein the threaded journals (7,20) of the two slip couplings are provided with threads running in opposite directions.

## Revendications

1. Accouplement à glissement,
- dans lequel l'accouplement à glissement a une paire d'éléments (1, 3) d'accouplement,
- dans lequel les deux éléments (1, 3) d'accouplement peuvent tourner autour d'un axe de rotation commun et ont respectivement une surface (5, 6) d'accouplement tournant annulairement autour de l'axe (4) de rotation,
- dans lequel l'un (1) des deux éléments (1, 3) d'accouplement a un tourillon (7) fileté, qui est aligné avec l'axe (4) de rotation et sur lequel est vissé un écrou (9) de serrage au moyen duquel la surface (6) d'accouplement de l'autre élément (3) d'accouplement peut être pressée sur la surface (5) d'accouplement du un élément (1) d'accouplement de manière à transmettre un couple de rotation agissant sur l'un des deux éléments (3) d'accouplement jusqu'à un couple d'adhérence sans glissement à l'autre élément (3, 1) d'accouplement et, en outre, à le limiter à un couple de glissement avec glissement des deux éléments (1, 3) d'accouplement l'un par rapport à l'autre, **caractérisé en ce que**
- un certain nombre de rondelles (10, 11) à déplacement libre sont disposées entre l'écrou (9) de serrage est l'autre élément (3) d'accouplement,
- l'écrou (9) de serrage, les rondelles (10, 11) à déplacement libre et l'autre élément (9) d'accouplement ont des tocs (12 à 16) d'entraînement coopérant entre eux,
- les tocs (12 à 16) d'entraînement permettent jusqu'à un angle limite un glissement des deux éléments (1, 3) d'accouplement l'un par rapport à l'autre sans torsion de l'écrou (9) de serrage et, s'il y a un glissement des deux éléments (1, 3) d'accouplement l'un par rapport à l'autre au-delà de l'angle limite, font subir obligatoirement une torsion à l'écrou (9) de serrage,
- s'il y a une torsion de l'écrou (9) de serrage, la pression de la surface (6) d'accouplement de l'autre élément (3) d'accouplement sur la surface (5) d'accouplement de l'un des éléments (1) d'accouplement et ainsi le couple d'adhérence pouvant être transmis sans glissement est modifié.

2. Accouplement à glissement suivant la revendication 1, **caractérisé en ce que** les surfaces (5, 6) d'accouplement sont constituées sous la forme de surfaces de cône.

3. Accouplement à glissement suivant la revendication 1 ou 2, **caractérisé en ce que** le tourillon (7) fileté est relié d'une manière sécurisée au un élément (1) d'accouplement.

4. Accouplement à glissement suivant la revendication 1 ou 2, **caractérisé en ce que** l'écrou (9) de serrage est solidaire en rotation de la rondelle (11) à déplacement libre qui en est voisine.

5. Accouplement à glissement suivant l'une des revendications précédentes, **caractérisé en ce que** le tourillon (7) fileté a un collet (22) de centrage, au moyen duquel les rondelles (10, 11) à déplacement libre sont maintenues centrées radialement par rapport à l'axe (4) de rotation.

6. Accouplement à glissement suivant l'une des revendications précédentes, **caractérisé en ce que** sur le un élément (1) d'accouplement est disposé un élément (23) de retenue de l'accouplement, au moyen duquel un décalage axial de l'autre élément (3) d'accouplement par rapport au un élément (1) d'accouplement est limité.

7. Accouplement à glissement suivant l'une des revendications précédentes, **caractérisé en ce que** les tocs (12 à 16) d'entraînement ont des dimensions telles qu'après le desserrage de l'écrou (9) de serrage, les tocs (12 à 16) d'entraînement sont à distance axialement les uns des autres de manière à rendre possible une torsion libre des rondelles (10, 11) à déplacement libre autour de l'axe (4) de rotation sans continuer à faire subir à l'écrou (9) de serrage une torsion.

8. Accouplement à glissement suivant l'une des revendications précédentes, **caractérisé en ce que** le tourillon (7) fileté a à son extrémité une partie (24) sans filetage de sorte que l'écrou (9) de serrage peut, lorsqu'il se trouve dans la partie (24) sans filetage, tourner librement autour de l'axe (4) de rotation sans déplacement axial.

9. Accouplement à glissement suivant l'une des revendications précédentes, **caractérisé en ce que** sur le tourillon (7) fileté est monté un élément (25) de retenue de l'écrou, à l'aide duquel un déplacement axial de l'écrou (9) de serrage est limité.

10. Accouplement à glissement suivant l'une des revendications précédentes, **caractérisé en ce que** l'accouplement à glissement est suspendu à la cardan.

11. Accouplement à glissement suivant la revendication 10, **caractérisé en ce que**, pour réaliser la suspension à la cardan, l'un des deux éléments (1, 3) d'accouplement a à l'extérieur radialement une couronne (27) dentée extérieure qui est guidée dans une couronne (28) dentée intérieure d'un manchon (19) entourant à l'extérieur radialement l'accouplement à glissement.

12. Paire d'accouplements à glissement,
dans lequel les deux accouplements à glissement sont constitués respectivement sous la forme d'un accouplement à glissement suivant l'une des revendications précédentes,
- dans laquelle l'un (3) des éléments (1, 3) à glissement de l'un des accouplements à glissement est solidaire en rotation de l'un (18) des éléments (18, 2) de l'accouplement de l'autre accouplement à glissement,
- dans lequel les tourillons (7, 20) filetés des deux accouplements à glissement sont munis de filetage de sens opposés.
